# EUROPEAN PATENT SPECIFICATION

(11) **EP 3 107 777 B1**
(45) Date of publication and mention of the grant of the patent: **19.12.2018**
(21) Application number: 15751648.5
(22) Date of filing: 13.02.2015
(51) Int. Cl.: B60T 10/02, B60T 1/087

(54) **HYDRODYNAMIC RETARDER DEVICE, METHOD FOR ITS USE AND VEHICLE**
HYDRODYNAMISCHER RETARDER, VERFAHREN ZU DESSEN VERWENDUNG UND FAHRZEUG
DISPOSITIF RALENTISSEUR HYDRODYNAMIQUE, SON PROCÉDÉ D'UTILISATION ET VÉHICULE

(30) Priority: 19.02.2014 SE 1450190
(43) Date of publication of application: 28.12.2016
(73) Proprietor: Scania CV AB, 151 87 Södertälje (SE)
(72) Inventor: SANNELIUS, Mikael, S-125 33 Älvsjö (SE); FÄRM, Johnny, S-129 51 Hägersten (SE); RYBÄCK, Petter, S-152 57 Södertälje (SE)
(74) Representative: Scania CV AB
(86) International application number: PCT/SE2015/050172
(87) International publication number: WO 2015/126312

(56) References cited:
- EP-A2- 1 251 050
- EP-A2- 2 006 564
- EP-A2- 2 258 960
- DE-A1-102009 016 817
- DE-A1-102010 010 222
- DE-B3-102005 050 480
- GB-A- 1 273 186
- US-A- 2 287 130
- US-A- 5 794 588
- US-A1- 2004 238 301
- US-A1- 2005 269 177
- US-A1- 2009 113 886
- US-A1- 2012 012 185

## Description

### Field of the invention

The present invention relates to a hydrodynamic retarder device for a vehicle, comprising at least one shovel head stator in order to, jointly with at least one shovel head rotor, form a shovel system with a workspace for reception of an aqueous working medium, and a retarder circuit connected to the workspace, in order to control the supply of the working medium to the workspace. The invention also relates to a method for operation of a hydrodynamic retarder device, and a vehicle equipped with a hydrodynamic retarder device.

### Background of the invention

In order to increase the driving efficiency and safety, and to reduce wear of the wheel brakes, primarily heavy goods vehicles are, according to prior art, equipped with retarder devices. A retarder device is a hydrodynamic auxiliary brake, which brakes the car's power-train with the help of the resistance exercised by a shovel system, operating an amount of liquid in a workspace. In operation, the braking energy absorbed by the retarder device transitions into heat energy in the liquid, which in turn is cooled down by a cooling system in the vehicle.

The braking torque is controlled through control of a pressure prevailing in the workspace between the shovel blades belonging partly to the retarder device's stator, and partly to its rotor. When the retarder device is not used, the workspace is essentially depressurised. However, a certain drag loss is created in the retarder device, since it still rotates with the power-train. From a fuel-saving perspective it is important to keep this drag loss as small as possible.

A method to avoid the drag loss is to mechanically disconnect the retarder device from the power-train when it is not used. This is possible with the help of a coupling, such as a synchronising clutch or a multi-plate clutch. When the retarder device then is to be connected to be used for braking, the retarder device's rotor has to be accelerated quickly, and synchronised with the power-train's engine speed. This must happen within fractions of a second, and the acceleration torque produced must be minimised, in order to avoid uncomfortable jerks to be generated in the vehicle.

In a retarder device using oil as a working medium, this is fully possible thanks to a low acceleration resistance, which is achieved since the shovel system is filled with air instead of oil during this acceleration phase.

In order to minimise the number of components and systems in the vehicle, it is advantageous if the vehicle's ordinary coolant, which typically contains a mixture of water and glycol, may be used as a working medium. A retarder device applying this principle is called a water retarder.

In a water retarder, however, it is problematic to aerate the shovel system during acceleration, since air that comes into contact with the coolant may partly follow the latter, and have an adverse impact on other components in the vehicle, with which the coolant comes into contact. For this reason, water retarders are operated in a partly water-filled state even when they are disconnected, entailing a relatively high acceleration torque.

US 2012/012185 A1 discloses a hydrodynamic retarder, for use in a motor vehicle drive train, which has tapping opening and filling channels connected with each other by re-guiding pipelines so that working medium flows from the opening into the channel and working chamber.

US 5 794 588 A discloses a propulsion unit with an engine and retarder. The same medium is used for engine cooling and for the hydrodynamic retarder and a valve controls connections between the retarder and the reservoir.

As examples of the technology's background, US2287130, US2006090971, WO2010034493, US2007102251 and DE10054078 may be mentioned.

### The objective and primary characteristics of the invention

It is an objective of the present invention to provide a further development of a hydrodynamic retarder device according to the above, and a method, with which the problems with the background technology are addressed and at least alleviated. This is achieved in an arrangement according to the invention by way of the retarder circuit comprising a drain valve device for the forced evacuation of working medium from the workspace, and by way of a negative pressure generator being connected in the retarder circuit, arranged to reduce the pressure in the workspace for receipt of evacuated, liquid working medium from the workspace in connection with initiation of the drain valve device.

In general, it should be noted that in the retarder device according to the invention, the negative pressure generator is installed to reduce the pressure in the workspace to or below the vapour pressure for the working medium, so that the workspace is vacated of liquid working medium through the water vapour formed. Thus, the retarder device's acceleration torque at the connection is reduced in order to be level with the corresponding acceleration torque for an oil retarder device. Vaporisation is achieved because the pressure in the enclosed workspace, defined by the stator and the rotor, is reduced almost instantly to the vapour pressure, or to a pressure below the vapour pressure. Thus the shovel space is quickly and efficiently vacated of liquid water and coolant, respectively, and mechanical connectivity/disconnectivity of the retarder device is made possible with comfort maintained, and with the use of a clutch device comprising uncomplicated clutch components. This is a great advantage, since the retarder device becomes connectible and disconnectable without the risk of air coming into contact with the coolant and resulting in an adverse impact on other components in the vehicle, with which the coolant comes into contact.

Through the innovative features relating to the draining valve device, which is initiated for the forced evacuation of working medium from the workspace, and in relation to the negative pressure generator, which is set up to receive thus forcibly evacuated working medium, several advantages are achieved. The braking torque applied by the retarder device is quickly reduced to a minimum. Thus, a quick disconnection of the retarder device from the power-train may thus be initiated, in order to further reduce the braking torque applied by the retarder device. However, in order to handle an error or a state of emergency in the vehicle, it may not be necessary to mechanically disconnect the retarder device from the power-train. Through the forced evacuation according to the invention, the torque is reduced sufficiently for the vehicle's system to be able, at least at an initial stage, to handle the error and/or state of emergency arisen.

The draining valve device is advantageously designed as a safety valve, which may be made to open very quickly if an error should occur, or if the braking torque needs to be reduced quickly, e.g. to avoid tendencies to skid in a vehicle.

The errors may be more or less temporarily sticking valves, and delays and inertia arising in control systems as well as in mechanical components. For safety reasons, high standards with respect to the elements comprised in the control of the retarder device's braking torque are required. The valves must not stick or get stuck, since this could entail problems with interrupting the braking at transitions between a decelerated and non-decelerated state during normal operation.

Furthermore, the retarder device must be such that it is able to handle the rapid processes initiated, when the skidding tendencies of the vehicle are noted by an anti-skidding system (ABS or similar) belonging to the vehicle. Such processes place great demands on the retarder braking at least decreasing very rapidly, in order for the anti-skidding system to be able to operate in a direction of skid termination, without any unwanted involvement of a braking retarder device.

The draining valve device according to the invention is advantageously designed to be optimised for its function as a safety valve with a large through flow area and brief opening times, for a fast flow of working medium flowing out from the workspace. Accordingly, the retarder device's other components do not need to be rebuilt or adapted for this function, but may instead be built and optimised for their respective functions, relating to control of braking torque emitted by the retarder device during normal operation.

They therefore do not need to be unnecessarily large, robust or quick-operated. This entails reduced cost of the component parts. Furthermore, there is an overall improvement of the retarder device's robustness against serious consequences of errors otherwise arising.

Through the insertion of the negative pressure generator, the rapidly evacuated amount of working medium from the workspace may be taken care of efficiently, so that no major pressure spikes arise in the liquid in the cooling system. Such pressure spikes would otherwise be highly undesirable, and even harmful to the component parts in the cooling system.

Since the retarder circuit comprises a directional valve, arranged to be initiated to shut off the flow of working medium to the workspace at the initiation of the drain valve device, backfilling of the workspace is avoided in an advantageous manner.

The negative pressure generator is advantageously arranged to reduce the pressure in the workspace to or below the vapour pressure for the working medium, so that the workspace thus is vacated of liquid working medium also at normal operation of the retarder device, to reduce uncomfortable jerks at connection with and disconnection from the power-train. For the function of the negative pressure generator during normal operation, there are typically large throughput areas in connected channels, as well as, naturally, a sufficiently significant volume, which, overall, is advantageous and useful at the present invention.

Generally, at normal operation before connection and disconnection, the inflow of the working medium to the workspace is closed, and the pressure in the workspace is reduced to or below the vapour pressure for the working medium, and therefore the workspace is vacated of the liquid working medium. In other words, the workspace is thus isolated and subjected to said negative pressure, which may, surprisingly, be brought to result quickly, nearly instantly, in the desired vacation of liquid from the workspace.

Preferably, a control valve is arranged in the control circuit downstream of the workspace, to provide for a possibility of controlling the braking torque applied by the retarder device. It is preferred to have a one-way valve arranged inside the retarder circuit in connection with the control valve, in order to ensure protection against backflow. This one-way valve may be separate from or integrated with the control valve.

The negative pressure generator is suitably connected with the retarder circuit downstream or upstream of the workspace, or directly with the workspace.

In some embodiments, the negative pressure generator is connected to the retarder circuit via an inlet valve, and to said coolant circuit via an exhaust conduit. Either, or each of the inlet conduit and the exhaust conduit, may thus need to be equipped with a one-way valve.

Preferably, the draining valve device and the negative pressure generator constitute one assembled unit since the cost, space and number of component parts in this case may be minimised.

Preferably, the negative pressure generator comprises a cylinder comprising a sealing piston, which may be moved between a first position, in which a section associated with the piston seals against a muzzle portion, placed in the cylinder, of a channel leading between the workspace and the cylinder, and a second position, in which said muzzle portion is open and the piston has been operated to generate a negative pressure.

Suitably, the piston is spring biased in the direction of its second position, and additionally set up to be fluid pressure activated in the direction of its first position.

The negative pressure generator is, at preferred alternative embodiments, a negative pressure container that may be pre-charged with negative pressure or a rotation pump.

These devices may, as in the case of a piston cylinder device, be installed to act at the required speed, so that in particular the insertion of a negative pressure container possible to pre-charge, which is constantly ready and directly switchable through a valve, entails a high degree of speed in an uncomplicated manner. With the use of a negative pressure container that may be pre-charged as a negative pressure generator, the inlet conduit need not be equipped with a one-way valve. There is no need to arrange an outlet conduit, but it is an advantage to have such an outlet conduit, since in this case no unwanted volumetric limitation arises.

A method according to the invention for the operation of a hydrodynamic retarder device according to the above, for connection and disconnection to a power-train in a vehicle, is characterised by a flow of working medium to the workspace being controlled by way of a retarder circuit connected to the workspace, wherein the retarder circuit is connected to the vehicle's ordinary coolant circuit, and the retarder device is connected and disconnected, respectively, to/from said power-train. If and when needed, the workspace is forcibly vacated of working medium by a draining valve device arranged in the retarder circuit, and evacuated liquid working medium from the workspace is received by a negative pressure generator connected in the retarder circuit, through which the pressure in the workspace is reduced in connection with the initiation of the draining valve device. Advantages similar to those described above are achieved through the innovative method.

The clutch device may subsequently optionally be initiated to disconnect the retarder device from the power-train.

Suitably, a directional valve arranged in the retarder circuit is initiated to shut off the flow of working medium to the workspace at the initiation of the drain valve device.

Preferably, the pressure in the workspace is reduced to or below the vapour pressure for the working medium, in order to vacate the workspace of liquid working medium.

Preferably, the negative pressure generator comprises a cylinder comprising a sealing piston, which piston is moved between a first position, in which a section associated with the piston seals against a muzzle portion, placed in the cylinder, of a channel leading between the workspace and the cylinder, and a second position, in which said muzzle portion is open and the piston is operated to generate negative pressure.

The piston is operated in the direction of its second position, suitably by a biased spring, and in the direction of its first state through pressure fluid impact.

The invention also relates to a vehicle, comprising a retarder device according to the above.

### Description of drawings

The invention will now be described in further detail based on the example embodiments and with reference to the enclosed drawings, on which:
Fig. 1 schematically shows a commercial vehicle equipped with a retarder device according to the invention,
Figs. 2 and 3 show a principle sketch of a retarder device according to the invention according to a first embodiment,
Fig. 4 shows a principle sketch of a retarder device according to the invention according to a second embodiment, and
Fig. 5 schematically shows a sequence of a method according to the invention in the form of a simple block diagram.

### Description of example embodiments

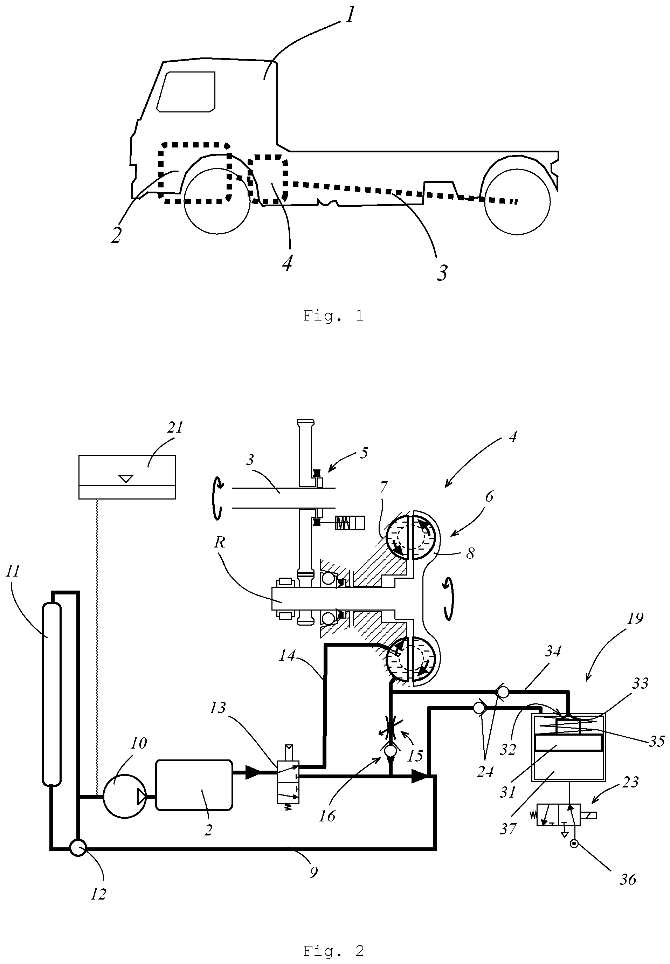

The commercial vehicle 1 shown in Fig. 1 is of the type comprising an engine 2, a power-train 3 and a retarder device 4, which may be connected and disconnected.

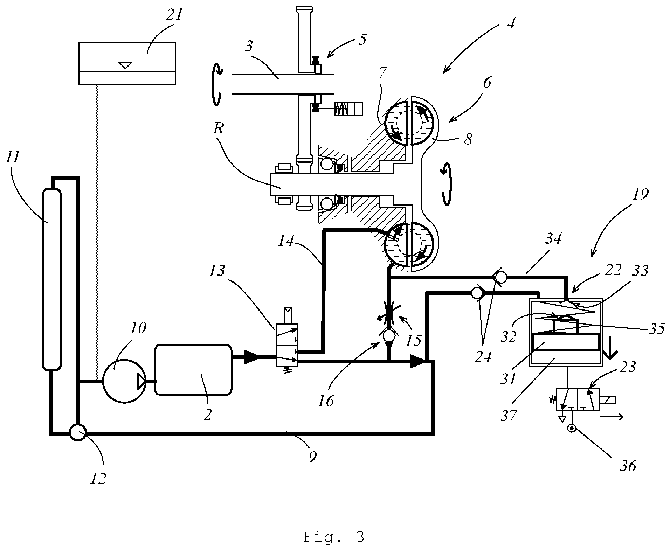

The basic structure of a retarder device 4 is illustrated by Figs. 2 and 3, wherein a clutch device 5 is arranged for connection and disconnection of the retarder device 4 with the vehicle's power-train 3. The retarder device 4 has a stator 7 and a rotor 8, which is rotatable around a shaft R.

Together, the stator 7 and the rotor 8 form a shovel system with a workspace 6, in which a greater or lesser amount of fluid is designed to be hurled around, in order to function as a working medium in the operation of the retarder device, so that energy absorbed by the retarder device transforms into heat. This heat is cooled off by the vehicle's ordinary cooling system, which comprises a coolant circuit 9, a water pump 10, a front cooler 11, an expansion tank 21 and a thermostat 12.

A directional valve 13 inserted in the coolant circuit 9 is installed to lead coolant as a working medium to the shovel system's workspace 6, and to shut off the flow to the workspace 6, respectively. From the directional valve 13, a retarder circuit 14 leads to an area in the workspace 6 where a lower pressure prevails during operation, and where coolant may be added as a working medium. The retarder circuit 14 is also, for the outlet of working medium from the workspace, connected to a peripheral area of the workspace 6, in which a higher pressure may be expected during operation and where outflow of the working medium may occur.

Downstream of the workspace 6, the retarder circuit passes through a control valve 15, with whose help the pressure in the workspace, and as a result thereof the amount of working medium in the workspace, is adjustable.

Further, downstream of the control valve 15, a one-way valve 16 is arranged, allowing for a flow of the working medium from the workspace 6, but preventing flow in the opposite direction.

Downstream of the workspace in the retarder circuit 14 and upstream of the control valve 15, a negative pressure circuit is connected, including a negative pressure generator 19, here displayed in the form of a piston cylinder device. In a cylinder, a sealing piston 31 is arranged, which may be moved between a first position (Fig. 2), in which a section 32 associated with the piston seals against a muzzle portion 33, placed in the cylinder, of a channel 34 leading between the workspace and the cylinder, and a second position (Fig. 3), in which said muzzle portion is open and the piston has been operated to generate negative pressure. Said section 32 associated with the piston, and the muzzle portion 33 form a draining valve device 22 for the retarder device.

Furthermore, the piston 31 is spring biased in the direction of its second state with the help of a spring 35.

The piston 31 is also arranged to be pressure fluid impacted in the direction of its first position in a cylinder chamber 37 opposite to the muzzle portion 33. For this purpose, a pressure source 36 for a gaseous medium is arranged, communicating with said cylinder chamber 37 via a valve 23. The valve 23 may be shifted between a pressure conveying position (Fig. 2), where the cylinder chamber 37 is pressurised, and an emptying position (Fig. 3), where the cylinder chamber is connected with the atmosphere or similar.

In the valve's 23 emptying position, the spring 35 presses the piston 31 in a downward direction, seen in Fig. 3, to open the draining valve device 22 on the one hand, and to generate a negative pressure in the conduit 34 and thus in the workspace as set out above, on the other hand.

The valve 23 may in turn be controlled by a system belonging to the vehicle, in order to quickly transition from the position in Fig. 2 to the position in Fig. 3 if an error arises in the retarder circuit, or if e.g. an anti-skid system belonging to the vehicle must be initiated. In connection therewith, the directional valve 13 is shifted for interruption of supply of working medium to the workspace, to the position displayed in Fig. 3.

At normal retarder braking, all available cooling water/coolant is permitted to enter as a working medium into the retarder device's workspace 6 through the directional valve 13. In this operating mode a fluid amount is active within the shovel system, and this fluid amount will during operation be imparted a rotating movement, according to the arrows inside the workspace 6.

At this operation, it is possible to control the braking torque by changing the pressure in the workspace, and thus the fluid amount, through adjustment of the control valve 15.

In this way, the amount of fluid that is impacted within the shovel system will thus change, entailing that an inner space becomes larger or smaller.

Overall, it may be said that in this operating mode the maximum braking action of the retarder device may be obtained.

In an operating mode with a mechanical connection or disconnection of the retarder device from the vehicle's power-train, a low drag torque is required for the retarder device, in order to avoid uncomfortable jerks.

Such low drag torque is achieved, on the one hand, by the retarder circuit 14 being disconnected from the cooling water circuit, and on the other, by ensuring that the workspace 6 substantially instantly is subjected to such a negative pressure that water vapour is formed for fast evacuation of water from the workspace 6.

Two one-way valves are marked 24, which, on the one hand, partly allow for a flow to the negative power generator from the workspace and prevent a flow in the opposite direction, and, on the other hand, allow for a flow from the negative pressure generator to the cooling circuit and prevent a flow in the opposite direction.

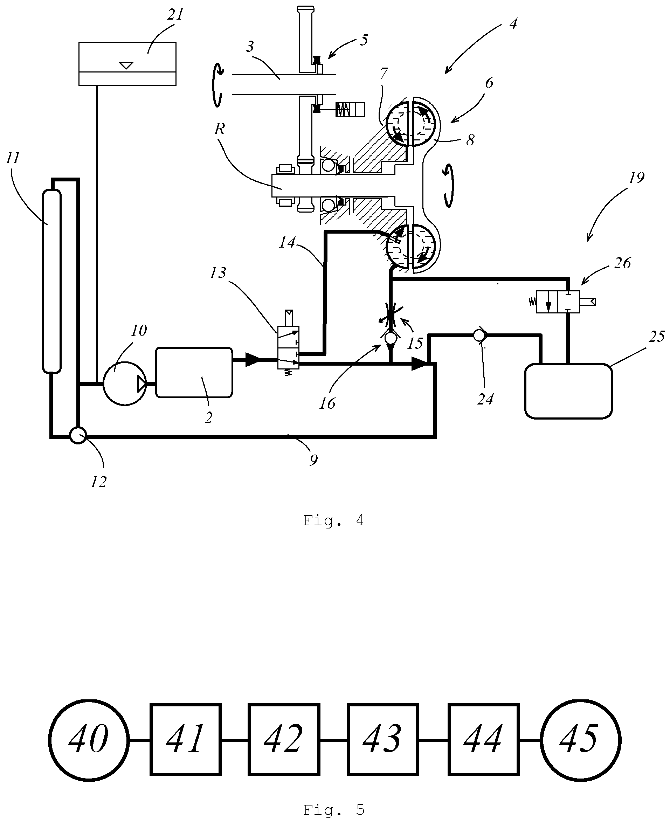

Fig. 4 illustrates an alternative embodiment of the invention, where the negative pressure generator is a negative pressure container 25 possible to pre-charge, which may be connected to the retarder circuit via a draining valve device 26.

The draining valve device 26 may be controlled in a manner similar to the specifications for valve 23 in Figs. 2 and 3. In such case, the one-way valve 24 is optional, but it is advantageous for the one-way valve 24 to be included.

One sequence of a method according to the invention is illustrated schematically through the block diagram in Fig. 5.

Position 40 relates to the start of the sequence.

Position 41 relates to normal operation of a vehicle, with the retarder device connected to the retarder circuit for retarder braking, through the directional valve's 13 settings.

Position 42 relates to detection of a state of emergency for the vehicle, when the retarder braking torque must immediately at least be reduced.

Position 43 relates to a shifting of the draining valve device, for substantially instant draining of the workspace of liquid working medium.

Position 44 relates to isolation of the retarder device's workspace from the cooling water circuit, and optional disconnection of the retarder device from the vehicle's power-train.

Position 45 relates to the completion of the sequence.

With the invention, only one single system with liquid having to be cooled is required for the vehicle. A vehicle equipped with a retarder device according to the invention therefore becomes e.g. lighter and less costly to produce, and also entails an environmental improvement compared to prior art. Since the retarder device may additionally be disconnected from the vehicle's power-train without any problems, the vehicle's driving economy is improved. The drag losses from a co-rotating retarder would otherwise negatively impact the vehicle's fuel consumption.

As an alternative to the negative pressure generator displayed on the drawings, other types of "suction devices" may be used, such as a fast-acting pump device.

A desired negative pressure generated by the negative pressure generator is in the range of or below 0.5 bar below atmospheric pressure, since the vapour pressure at normal working temperature amounts to approximately this value. Application of greater negative pressure may be required at lower temperatures, because of the vapour pressure's temperature dependency.

A retarder device according to the invention may comprise a shovel-equipped stator in order to, together with a shovel-equipped rotor, form the shovel system with its workspace. According to the invention, the retarder device may also comprise more than one shovel-equipped stator, interacting with corresponding more than one shovel-equipped rotor, to form the shovel system with its workspace.

## Claims

1. Hydrodynamic retarder device (4), for connection and disconnection to a power-train (3) in a vehicle (1), wherein the retarder device comprises:
- at least one shovel-equipped stator (7), which, together with a shovel-equipped rotor (8), forms a shovel system with a workspace (6) for receipt of an aqueous working medium,
- a retarder circuit (14) connected to the workspace (6), in order to control the inflow of a working medium to the workspace (6), wherein the retarder circuit (14) is arranged to be connected to the vehicle's ordinary coolant circuit (9), and
- a clutch device for connection and disconnection of said retarder device (4) to/from said power-train (3),
**characterised in that**
- the retarder circuit (14) comprises a draining valve device (22; 26) for forced evacuation of working medium from the workspace (6), and
- **in that** a negative pressure generator (19) is connected in the retarder circuit (14), arranged to reduce the pressure in the workspace (6) for receipt of liquid working medium evacuated from the workspace, in connection with initiation of the draining valve device (22; 26).

2. Retarder device according to claim 1, **characterised in that** the retarder circuit (14) comprises a directional valve (13), which is arranged to be initiated to shut off the flow of working medium to the workspace (6), when the draining valve device (22;26) is initiated.

3. Retarder device according to claim 1 or 2, **characterised in that** the negative pressure generator (19) is arranged to reduce the pressure in the workspace (6) to or below the vapour pressure for the working medium, so that the workspace is thus vacated of liquid working medium.

4. Retarder device according to any of the previous claims, **characterised in that** a control valve (15) is arranged in the control circuit downstream of the workspace.

5. Retarder device according to any of the previous claims, **characterised in that** the negative pressure generator (19) is connected to the retarder circuit (14) with an inlet conduit.

6. Retarder device according to any of the previous claims, **characterised in that** the negative pressure generator (19) is connected to the cooling water circuit (9) with an outlet conduit.

7. Retarder device according to any of the previous claims, **characterised in that** the draining valve device (22) and the negative pressure generator (19) constitute one assembled unit.

8. Retarder device according to claim 7, **characterised in that** the negative pressure generator (19) comprises a cylinder comprising a sealing piston, which may be moved between a first position, in which a section associated with the piston seals against a muzzle portion, placed in the cylinder, of a channel leading between the workspace and the cylinder, and a second position, in which said muzzle portion is open and the piston is operated to generate a negative pressure.

9. Retarder device according to claim 8, **characterised in that** the piston is spring biased in the direction of its second position.

10. Retarder device according to claim 8 or 9, **characterised in that** the piston is arranged to be pressure fluid impacted in the direction of its first position.

11. Method for operation of a hydrodynamic retarder device (4) for connection and disconnection to a power-train (3) in a vehicle (1), wherein:
- at least one shovel-equipped stator (7) which, together with at least one shovel-equipped rotor (8), forms a shovel system with a workspace (6) for receipt of an aqueous working medium,
- in-flow of a working medium to the workspace (6) is controlled by way of a retarder circuit (14) connected to the workspace (6), wherein the retarder circuit (14) is connected to the vehicle's ordinary cooling water circuit (9), and
- the retarder device is connected and disconnected, respectively, to/from said power-train (3),
**characterised in that**
- where needed, the workspace (6) is forcibly vacated of working medium through a draining valve device (22; 26) arranged in the retarder circuit (14), and
- liquid working medium evacuated from the workspace is received by a negative pressure generator (19) connected in the retarder circuit (14), through which negative pressure generator the pressure in the workspace (6) is reduced, in connection with initiation of the draining valve device (22; 26) .

12. Method according to claim 11, **characterised in that** a directional valve (13) arranged in the retarder circuit (14) is initiated to shut off the in-flow of working medium to the workspace (6), when the draining valve device (22;26) is initiated.

13. Method according to any of claims 11 - 12, wherein the negative pressure generator (19) comprises a cylinder containing a sealing piston, **characterised in that** the piston is moved between a first position, in which a section associated with the piston seals against a muzzle portion, placed in the cylinder, of a channel leading between the workspace and the cylinder, and a second position, in which said muzzle portion is open and the piston is operated to generate a negative pressure.

14. Method according to claim 13, **characterised in that** the piston is operated in the direction of its second position by a biased spring, and/or in the direction of its first position through pressure fluid impact.

15. Vehicle comprising a retarder device according to any of claims 1-10.

## Patentansprüche

1. Hydrodynamische Retardervorrichtung (4) zum Verbinden und Trennen mit/von einem Antriebsstrang (3) in einem Fahrzeug (1), wobei die Retardervorrichtung umfasst:
- mindestens einen schaufelbestückten Stator (7), welcher zusammen mit einem schaufelbestückten Rotor (8) ein Schaufelsystem mit einem Arbeitsbereich (6) zur Aufnahme eines wasserartigen Arbeitsmediums bildet,
- einen Retarderkreislauf (14), der mit dem Arbeitsbereich (6) verbunden ist, um den Zufluss eines Arbeitsmediums zu dem Arbeitsbereich (6) zu steuern, wobei der Retarderkreislauf (14) eingerichtet ist, um mit dem normalen Kühlkreislauf (9) des Fahrzeugs verbunden zu sein, und
- eine Kupplungsvorrichtung zum Verbinden und Trennen der Retardervorrichtung (4) mit/von dem Antriebsstrang (3),
**dadurch gekennzeichnet, dass**
- der Retarderkreislauf (14) eine Abflussventilvorrichtung (22; 26) zur Zwangsentleerung von Arbeitsmedium aus dem Arbeitsbereich (6) umfasst, und
- dass ein Unterdruckerzeuger (19) in dem Retarderkreislauf (14) eingebunden ist und angeordnet ist, um wasserartiges Arbeitsmedium aufzunehmen, welches aus dem Arbeitsbereich abgeführt wurde, durch das Verringern des Drucks in dem Arbeitsbereich (6) in Verbindung mit einer Ingangsetzung der Abflussventilvorrichtung (22; 26).

2. Retardervorrichtung nach Anspruch 1, **dadurch gekennzeichnet, dass** der Retarderkreislauf (14) ein Wegeventil (13) umfasst, welches angeordnet ist, um damit zu beginnen, den Fluss des Arbeitsmediums zu dem Arbeitsbereich (6) zu blockieren, wenn die Abflussventilvorrichtung (22; 26) in Gang gesetzt wurde.

3. Retardervorrichtung nach Anspruch 1 oder 2, **dadurch gekennzeichnet, dass** der Unterdruckerzeuger (19) angeordnet ist, um den Druck in dem Arbeitsbereich (6) auf oder unter den Dampfdruck des Arbeitsmediums zu verringern, sodass der Arbeitsbereich dadurch von flüssigem Arbeitsmedium entleert wird.

4. Retardervorrichtung nach einem der vorherigen Ansprüche, **dadurch gekennzeichnet, dass** ein Steuerventil (15) in dem Steuerkreislauf eingerichtet ist und dem Arbeitsbereich nachgeschaltet ist.

5. Retardervorrichtung nach einem der vorherigen Ansprüche, **dadurch gekennzeichnet, dass** der Unterdruckerzeuger (19) mit dem Retarderkreislauf (14) durch eine Einlassleitung verbunden ist.

6. Retardervorrichtung nach einem der vorherigen Ansprüche, **dadurch gekennzeichnet, dass** der Unterdruckerzeuger (19) mit dem Kühlwasserkreislauf (9) durch eine Auslassleitung verbunden ist.

7. Retardervorrichtung nach einem der vorherigen Ansprüche, **dadurch gekennzeichnet, dass** die Abflussventilvorrichtung (22) und der Unterdruckerzeuger (19) eine zusammengesetzte Einheit darstellen.

8. Retardervorrichtung nach Anspruch 7, **dadurch gekennzeichnet, dass** der Unterdruckerzeuger (19) einen Zylinder umfasst, der einen Dichtungskolben umfasst, welcher zwischen einer ersten Position und einer zweiten Position bewegt werden kann, wobei in der ersten Position ein dem Kolben zugehöriger Abschnitt einen Mündungsbereich eines Kanals abdichtet, der zwischen dem Arbeitsbereich und dem Zylinder entlang führt, wobei der Mündungsbereich in dem Zylinder angeordnet ist, und wobei in der zweiten Position der Mündungsbereich offen ist und der Kolben betrieben wird, um einen Unterdruck zu erzeugen.

9. Retardervorrichtung nach Anspruch 8, **dadurch gekennzeichnet, dass** der Kolben in die Richtung seiner zweiten Position federvorgespannt ist.

10. Retardervorrichtung nach Anspruch 8 oder 9, **dadurch gekennzeichnet, dass** der Kolben angeordnet ist, um in die Richtung seiner ersten Position durch ein unter Druck gesetztes Fluid gedrückt zu werden.

11. Verfahren zur Bedienung einer hydrodynamischen Retardervorrichtung (4) zum Verbinden und Trennen mit/von einem Antriebsstrang (3) in einem Fahrzeug (1), wobei:
- mindestens ein schaufelbestückten Stator (7) zusammen mit einem schaufelbestückten Rotor (8) ein Schaufelsystem mit einem Arbeitsbereich (6) zur Aufnahme eines wasserartigen Arbeitsmediums bildet,
- ein Zufluss eines Arbeitsmediums zu einem Arbeitsbereich (6) von einem Retarderkreislauf (14) gesteuert wird, der mit dem Arbeitsbereich (6) verbunden ist, wobei der Retarderkreislauf (14) mit dem normalen Kühlwasserkreislauf (9) des Fahrzeugs verbunden ist, und
- die Retardervorrichtung mit/von dem Antriebsstrang (3) verbunden und getrennt wird,
**dadurch gekennzeichnet, dass** dann,
- wenn erforderlich, der Arbeitsbereich (6) von dem Arbeitsmedium durch die Abflussventilvorrichtung (22; 26) zwangsentleert wird, die in dem Retarderkreislauf (14) angeordnet ist, wobei
- flüssiges Arbeitsmedium, das aus dem Arbeitsbereich entleert wurde, von einem Unterdruckerzeuger (19) aufgenommen wird, der in dem Retarderkreislauf (14) eingebunden ist, wobei durch diesen Unterdruckerzeuger der Druck in dem Arbeitsbereich (6) durch Ingangsetzung der Abflussventilvorrichtung (22; 26) verringert wird.

12. Verfahren nach Anspruch 11, **dadurch gekennzeichnet, dass** ein in dem Retarderkreislauf (14) angeordnetes Wegeventil (13) in Gang gesetzt wird, um den im Zufluss des Arbeitsmediums zu dem Arbeitsbereich (6) zu blockieren, wenn die Abflussventilvorrichtung (22; 26) in Gang gesetzt wird.

13. Verfahren nach einem der Ansprüche 11-12, wobei der Unterdruckerzeuger (19) einen Zylinder umfasst, der einen Dichtungskolben umfasst, **dadurch gekennzeichnet, dass** der Kolben zwischen einer ersten Position und einer zweiten Position bewegt wird, wobei in der ersten Position ein dem Kolben angehöriger Abschnitt ein Mündungsteil eines Kanals abdichtet, der zwischen dem Arbeitsbereich und dem Zylinder entlang führt, wobei das Mündungsteil in dem Zylinder angeordnet ist, und wobei in der zweiten Position das Mündungsteil offen ist und der Kolben betrieben wird, um einen Unterdruck zu erzeugen.

14. Verfahren nach Anspruch 13, **dadurch gekennzeichnet, dass** der Kolben in die Richtung seiner zweiten Position durch eine vorgespannte Feder und/oder in die Richtung seiner ersten Position durch Drücken eines unter Druck gesetztes Fluides bedient wird.

15. Fahrzeug, das eine Retardervorrichtung nach einem der Ansprüche 1-10 umfasst.

## Revendications

1. Dispositif ralentisseur hydrodynamique (4), pour la connexion et la déconnexion à un groupe motopropulseur (3) dans un véhicule (1), dans lequel le dispositif ralentisseur comprend :
- au moins un stator équipé d'une pelle (7), qui, conjointement avec un rotor équipé d'une pelle (8), forme un système de pelle avec un espace de travail (6) pour la réception d'un milieu de travail aqueux,
- un circuit ralentisseur (14) relié à l'espace de travail (6), afin de commander le flux entrant d'un milieu de travail vers l'espace de travail (6), dans lequel le circuit ralentisseur (14) est agencé pour être relié au circuit de refroidissement ordinaire (9) du véhicule, et
- un dispositif d'embrayage pour la connexion et la déconnexion dudit dispositif ralentisseur (4) audit/dudit groupe motopropulseur (3),
**caractérisé en ce que**
- le circuit ralentisseur (14) comprend un dispositif de soupape de drainage (22 ; 26) pour une évacuation forcée de milieu de travail depuis l'espace de travail (6), et
- **en ce qu'**un générateur de pression négative (19) est branché dans le circuit ralentisseur (14), agencé pour réduire la pression dans l'espace de travail (6) pour la réception de milieu de travail liquide évacué de l'espace de travail, en connexion avec le déclenchement du dispositif de soupape de drainage (22 ; 26).

2. Dispositif ralentisseur selon la revendication 1, **caractérisé en ce que** le circuit ralentisseur (14) comprend une soupape directionnelle (13), qui est agencée pour être déclenchée pour arrêter le flux de milieu de travail vers l'espace de travail (6), lorsque le dispositif de soupape de drainage (22 ; 26) est déclenché.

3. Dispositif ralentisseur selon la revendication 1 ou 2, **caractérisé en ce que** le générateur de pression négative (19) est agencé pour réduire la pression dans l'espace de travail (6) à ou sous la pression de vapeur pour le milieu de travail, de sorte que l'espace de travail est ainsi vidé de milieu de travail liquide.

4. Dispositif ralentisseur selon l'une quelconque des revendications précédentes, **caractérisé en ce qu'**une soupape de commande (15) est agencée dans le circuit de commande en aval de l'espace de travail.

5. Dispositif ralentisseur selon l'une quelconque des revendications précédentes, **caractérisé en ce que** le générateur de pression négative (19) est relié au circuit ralentisseur (14) avec un conduit d'entrée.

6. Dispositif ralentisseur selon l'une quelconque des revendications précédentes, **caractérisé en ce que** le générateur de pression négative (19) est relié au circuit d'eau de refroidissement (9) avec un conduit de sortie.

7. Dispositif ralentisseur selon l'une quelconque des revendications précédentes, **caractérisé en ce que** le dispositif de soupape de drainage (22) et le générateur de pression négative (19) constituent une unité assemblée.

8. Dispositif ralentisseur selon la revendication 7, **caractérisé en ce que** le générateur de pression négative (19) comprend un cylindre comprenant un piston d'étanchéité qui peut être déplacé entre une première position, dans laquelle une section associée au piston scelle contre une portion de bouche, placée dans le cylindre, d'un canal conduisant entre l'espace de travail et le cylindre, et une deuxième position, dans laquelle ladite portion de bouche est ouverte et le piston est actionné pour générer une pression négative.

9. Dispositif ralentisseur selon la revendication 8, **caractérisé en ce que** le piston est sollicité par ressort dans la direction de sa deuxième position.

10. Dispositif ralentisseur selon la revendication 8 ou 9, **caractérisé en ce que** le piston est agencé pour être enfoncé par un fluide sous pression dans la direction de sa première position.

11. Procédé de fonctionnement d'un dispositif ralentisseur hydrodynamique (4) pour la connexion et la déconnexion à un groupe motopropulseur (3) dans un véhicule (1), dans lequel :
- au moins un stator équipé d'une pelle (7), qui, conjointement avec au moins un rotor équipé d'une pelle (8), forme un système de pelle avec un espace de travail (6) pour la réception d'un milieu de travail aqueux,
- un flux entrant d'un milieu de travail vers l'espace de travail (6) est commandé par le biais d'un circuit ralentisseur (14) relié à l'espace de travail (6), dans lequel le circuit ralentisseur (14) est relié au circuit d'eau de refroidissement ordinaire (9) du véhicule, et
- le dispositif ralentisseur est connecté et déconnecté, respectivement, audit/dudit groupe motopropulseur (3),
**caractérisé en ce que**
- si nécessaire, l'espace de travail (6) est vidé de force de milieu de travail à travers un dispositif de soupape de drainage (22 ; 26) agencé dans le circuit ralentisseur (14), et
- du milieu de travail liquide évacué de l'espace de travail est reçu par un générateur de pression négative (19) branché dans le circuit ralentisseur (14), à travers lequel générateur de pression négative la pression dans l'espace de travail (6) est réduite, en connexion avec le déclenchement du dispositif de soupape de drainage (22 ; 26).

12. Procédé selon la revendication 11, **caractérisé en ce qu'**une soupape directionnelle (13) agencée dans le circuit ralentisseur (14) est déclenchée pour arrêter le flux entrant de milieu de travail vers l'espace de travail (6), lorsque le dispositif de soupape de drainage (22 ; 26) est déclenché.

13. Procédé selon l'une quelconque des revendications 11-12, dans lequel le générateur de pression négative (19) comprend un cylindre contenant un piston d'étanchéité, **caractérisé en ce que** le piston est déplacé entre une première position, dans laquelle une section associée au piston scelle contre une portion de bouche, placée dans le cylindre, d'un canal conduisant entre l'espace de travail et le cylindre, et une deuxième position, dans laquelle ladite portion de bouche est ouverte et le piston est actionné pour générer une pression négative.

14. Procédé selon la revendication 13, **caractérisé en ce que** le piston est actionné dans la direction de sa deuxième position par un ressort sollicité, et/ou dans la direction de sa première position par le biais d'un enfoncement par fluide sous pression.

15. Véhicule comprenant un dispositif ralentisseur selon l'une quelconque des revendications 1-10.
